# EUROPEAN PATENT SPECIFICATION

(11) **EP 1 562 008 B1**
(45) Date of publication and mention of the grant of the patent: **21.10.2009**
(21) Application number: 04016099.6
(22) Date of filing: 08.07.2004
(51) Int. Cl.: F25B 9/14

(54) **Stirling cooler and heat exchanger thereof**
Stirling-Kühlanlage und zugehöriger Wärmetauscher
Refroidisseur Stirling et échangeur de chaleur associé

(30) Priority: 29.01.2004 KR 2004005675
(43) Date of publication of application: 10.08.2005
(73) Proprietor: LG Electronics, Inc., Seoul 150-010 (KR)
(72) Inventor: Park, Jong Jin, Namdong-ku, Inchun-si 405-245 (KR); Kim, Seon Young, Siheung-si, Kyungki-do 429-735 (KR)
(74) Representative: Urner, Peter

(56) References cited:
- EP-A- 0 935 063
- US-A1- 2003 221 427
- PATENT ABSTRACTS OF JAPAN vol. 1999, no. 13, 30 November 1999 (1999-11-30) -& JP 11 223404 A (SANYO ELECTRIC CO LTD), 17 August 1999 (1999-08-17)
- PATENT ABSTRACTS OF JAPAN vol. 014, no. 023 (M-920), 17 January 1990 (1990-01-17) -& JP 01 262354 A (MITSUBISHI ELECTRIC CORP), 19 October 1989 (1989-10-19)

## Description

### BACKGROUND OF THE INVENTION

### Field of the Invention

The present invention relates to a stirling cooler and a heat exchanger thereof, and more particularly to a stirling cooler and a heat exchanger thereof, which comprises an inner heat exchanger including a main body installed between a case and a cylinder and a plurality of through holes formed through the main body in an axial direction.

### Description of the Related Art

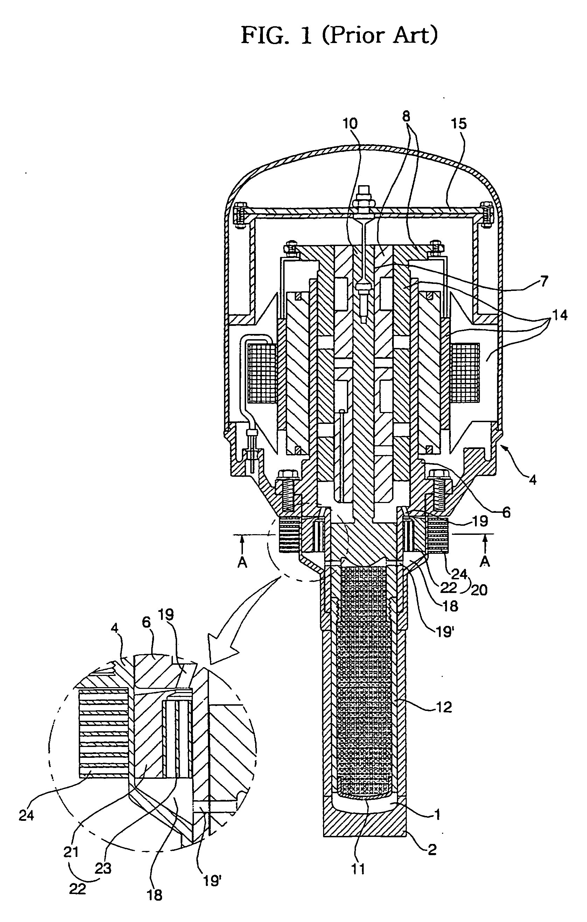

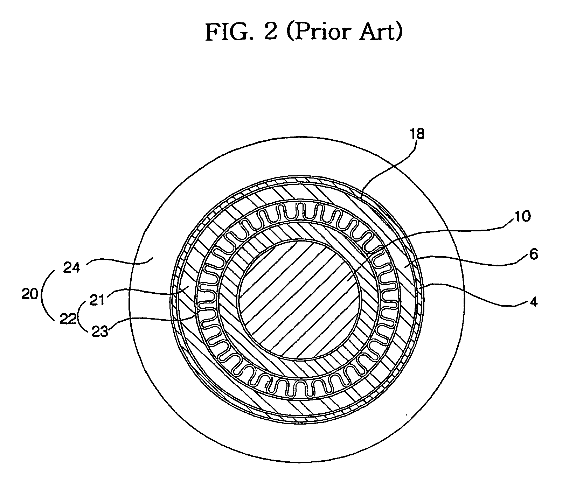

As shown in Figs. 1 and 2, a conventional stirling cooler comprises a case 4 provided with a cold tip 2 at an opened end thereof, a cylinder 6 fixedly installed in the case 4 and filled with a fluid, a piston 8 installed in the cylinder 6 such that the piston 8 can reciprocate and provided with a hollow 7 formed therein, a displacer 10 installed in the hollow 7 of the piston 8 such that the displacer 10 can reciprocate, a regenerator 12 connected to the displacer 10 in a longitudinal direction, and provided with a cavity 1 positioned between the regenerator 12 and the cold tip 2 and filled with the fluid, and a heat exchanger 20 connected to the cylinder 6 and the regenerator 12.

The piston 8 is connected to a linear motor 14 installed between the case 4 and the cylinder 6, and reciprocates. The displacer 10 is connected to an elastic member 15 installed in the case 4 such that the displacer 10 is opposite to the regenerator 12, thus being elastically supported such that the displacer 10 faces the cold tip 2. A hole 11 is formed in a lower part of the regenerator 12, opposite to the cold tip 2.

The heat exchanger 20 includes an inner heat exchanger 22 installed in a heat exchange chamber 18 prepared between the cylinder 6 and the case 4, and an outer heat exchanger 24 installed on an outer surface of the case 4 so that the case 4 is positioned between the inner heat exchanger 22 and the outer heat exchanger 24.

A first hole 19 communicating with the heat exchanger chamber 18 is formed through cylinder 6, and a second hole 24 communicating with the regenerator 12 is formed through the cylinder 6.

The inner heat exchanger 22 includes a ring-shaped main body 21 obtained by molding a material having a high thermal conductivity and fixed to an inner surface of the case 2, and a pin 23 having a corrugated shape fixed to an inner circumference of the main body 21.

Hereinafter, operation of the above-described conventional stirling cooler will be described in detail.

When the piston 8 moves close to the cold tip 2, the fluid of the cylinder 6 is isothermally compressed, and is discharged to the heat exchange chamber 18 to emit heat. Then, the fluid is introduced into the regenerator 12 to emit sensible heat, and fills the cavity 1 between the regenerator 12 and the cold tip 2 and is isothermally expanded simultaneously. Here, as the fluid fills the cavity 1 between the regenerator 12 and the cold tip 2, the regenerator 12 and the displacer 10 move away from the cold tip 2.

Thereafter, when the piston 8 moves away from the cold tip 2, the displacer 10 and the regenerator 12 are returned to their earlier positions toward the cold tip 2 by the elastic force of the elastic member 19. The fluid filling the cavity 1 between the regenerator 12 and the cold tip 2 subsequently passes through the regenerator 12 and the heat exchange chamber 18 to absorb heat, and re-fills the cylinder 6.

Since the pin 23 must be densely corrugated in order to improve the heat exchange efficiency of the inner heat exchanger 22, the above conventional stirling cooler has an intricate structure, thus having a complicated production process. Further, the density of the corrugations of the installed in the piston such that the displacer can reciprocate; a regenerator positioned between the displacer and the cold tip; an inner heat exchanger installed in the case such that the inner heat exchanger is connected to the regenerator and the cylinder; and an outer heat exchanger installed on an outer surface of the case opposite to the inner heat exchanger, wherein the inner heat exchanger includes a main body for transferring heat, and through holes formed through the main body for allowing the fluid to flow into the cylinder and the regenerator, wherein an outer surface of the main body of the inner heat exchanger contacts an inner surface of the case and wherein the main body of the inner heat exchanger having a ring shape is positioned between the cylinder and the case.

Further, preferably, an inner surface of the main body of the inner heat exchanger may contact an outer surface of the cylinder.

Preferably, the cylinder and the regenerator may be arranged in a line in an axial direction of the cylinder, and the through holes of the inner heat exchanger may be formed in the axial direction of the cylinder.

Further, preferably, the through holes of the inner heat exchanger may be prepared in plural number along a circumferential direction of the main body of the inner heat exchanger. Moreover, preferably, the through holes of the inner heat exchanger may be prepared in plural number along a widthwise direction of the main body of the inner heat exchanger.

In accordance with another aspect of the present invention there is provided a stirling cooler comprising: a case provided with a cold tip at an end thereof; a cylinder fixed to the case and filled with a fluid; a piston installed in the cylinder such that the piston can reciprocate; a displacer installed in the piston such that the displacer can reciprocate; a regenerator positioned between the displacer and the cold tip; an inner heat exchanger installed in the case such that the inner heat exchanger is connected to the regenerator and the cylinder; and an outer heat exchanger installed on an outer surface of the case opposite to the inner heat exchanger, wherein the inner heat exchanger includes a main body having a ring shape positioned between the cylinder and the case for transferring heat and through holes formed through the main body along an axial direction for passing the fluid, and wherein an inner surface of the main body of the inner heat exchanger contacts an outer surface of the cylinder.

In accordance with yet another aspect of the present invention, there is provided a heat exchanger for a stirling cooler, comprising: an inner heat exchanger installed in a heat exchange chamber provided between a case and a cylinder; and an outer heat exchanger installed at the outside of the heat exchange chamber, wherein the inner heat exchanger includes a main body having a ring shape fixed to the heat exchange chamber for transferring heat, and a plurality of through holes formed through the main body along an axial direction.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is a longitudinal-sectional view of a conventional stirling cooler;
Fig. 2 is a cross-sectional view of the conventional stirling cooler taken along the line A-A of Fig. 1;

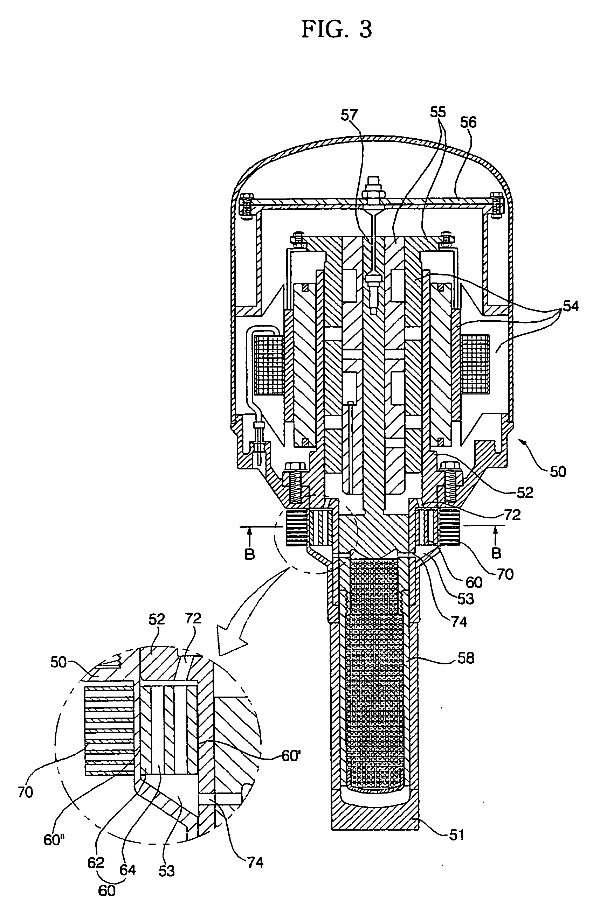

Fig. 3 is a longitudinal-sectional view of a stirling cooler in accordance with the present invention; and

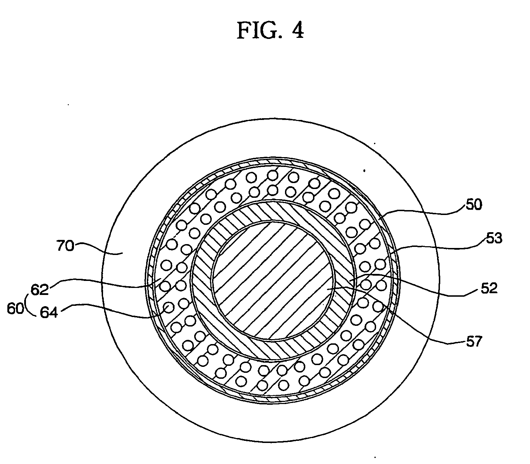

Fig. 4 is a cross-sectional view of the stirling cooler taken along the line B-B of Fig. 3.

### DESCRIPTION OF THE PREFERRED EMBODIMENTS

Now, preferred embodiments of the present invention will be described in detail with reference to the annexed drawings.

The present invention may comprise several embodiments, but the most preferred embodiment will be described hereinafter. In the following description of the present invention, a detailed description of known functions and configurations incorporated herein will be omitted when it may make the subject matter of the present invention rather unclear.

A stirling cooler in accordance with the present invention comprises a case 50 provided with a cold tip 51 at an opened end thereof, a cylinder 52 fixedly installed in the case 50 and filled with a fluid, a heat exchange chamber 53 positioned between the case 50 and a lower part of the cylinder 52, an inner heat exchanger 60 installed in the heat exchange chamber 53, and an outer heat exchange 70 installed on an outer surface of the case 50 and surrounding the heat exchange chamber 53.

A linear motor 54 is installed between the case 50 and an upper part of the cylinder 52, a piston 55 connected to the linear motor 54 is installed in the cylinder 52 such that the piston 55 can reciprocate, a displacer 57 supported by an elastic member 56 installed on the case 50 is installed in the piston 55 such that the displacer 57 can reciprocate, and a regenerator 58 is installed between the displacer 57 and the cold tip 51.

A first hole 22 communicating with the cylinder 52 is formed through an upper part of the heat exchanger 53, and a second hole 74 communicating with the regenerator 58 is formed through a lower part of the heat exchanger 53. The heat exchange chamber 53 is positioned between the case 50 and the cylinder 52, thereby having a ring-shaped cross-section.

The inner heat exchanger 60 includes a main body 62 obtained by molding a material having a high thermal conductivity for transferring heat, and through holes 64 formed through the main body 62 so that the fluid flows into the cylinder 52 and the regenerator 58.

Since the main body 62 of the inner heat exchanger 60 has a ring shape, which is the same as that of the heat exchange chamber 53, the inner heat exchanger 60 can be installed in the heat exchange chamber 53. The main body 62 of the inner heat exchanger 60 has a designated size such that an inner surface 60' of the main body 62 contacts an outer surface of the cylinder 52 and an outer surface 60" of the main body 62 contacts an inner surface of the case 50, thus allowing the fluid introduced into the heat exchange chamber 53 to pass through the inner heat exchanger 60.

Here, the cylinder 52 and the regenerator 58 are arranged in a line in an axial direction of the cylinder 52, and the first hole 72 and the second hole 74 of the heat exchange chamber 53 are separated from each other in the axial direction of the cylinder 52. Thus, the through holes 64 of the inner heat exchanger 60 are aligned in the axial direction of the cylinder 52.

The through holes 64 of the inner heat exchanger 60 are prepared in plural number in a circumferential direction of the main body 62 of the inner heat exchanger 60 so as to increase a contact area between the main body 62 of the inner heat exchanger 60 and the fluid. The through holes 64 of the inner heat exchanger 60 may be spaced from each other in a widthwise direction, i.e., a radial direction, of the main body 62 of the inner heat exchanger 60.

The outer heat exchanger 70 includes a plurality of pins arranged on an outer surface of the case 50 and separated from each other in a circumferential direction of the case 50.

Hereinafter, operation of the above-described conventional stirling cooler will be described in detail.

When the linear motor 54 is operated, the piston 55 moves close to the cold tip 51, and the fluid of the cylinder 52 is isothermally compressed and discharged to the heat exchange chamber 66. Since the main body 62 of the inner heat exchanger 60 is made of a material having a high thermal conductivity, when the fluid flowing into the heat exchange chamber 66 passes through the through holes 64 of the inner heat exchanger 60, the heat of the fluid is absorbed by the main body 62 of the inner heat exchanger 60 and the main body 62 of the inner heat exchanger 60 is cooled by emitting the heat to the outer heat exchanger 70.

After the fluid cooled by the heat exchange chamber 66 is introduced into the regenerator 58 so that the sensible heat of the fluid is absorbed by the regenerator 58, the fluid fills the cavity between the regenerator 58 and the cold tip 51 and is isothermally expanded. When the fluid positioned between the regenerator 58 and the cold tip 51 is isothermally expanded, the regenerator 58 and the displacer 57 move away from the cold tip 52.

Thereafter, when the piston 55 moves away from the cold tip 51 by means of the operation of the linear motor 54, the regenerator 58 and the displacer 57 move close to the cold tip 51 by the elastic force of the elastic member 56. Thereby, the fluid filling the cavity between the regenerator 58 and the cold tip 51 subsequently passes through the regenerator 58 and the heat exchange chamber 53, and re-fills the cylinder 52, thus being isovolumetrically regenerated.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A stirling cooler comprising:
- a case (50) provided with a cold tip (51) at an end thereof;
- a cylinder (52) fixed to the case (50) and filled with a fluid;
- a piston (55) installed in the cylinder (52) such that the piston can reciprocate;
- a displacer (57) installed in the piston (55) such that the displacer (57) can reciprocate;
- a regenerator (58) positioned between the displacer (57) and the cold tip (51);
- an inner heat exchanger (60) installed in the case (50) such that the inner heat exchanger (60) is connected to the regenerator (58) and the cylinder (52); and
- an outer heat exchanger (70) installed on an outer surface of the case (50) opposite to the inner heat exchanger (60),
- wherein the inner heat exchanger (60) includes a main body (62) for transferring heat, **characterized in that** through holes (64) are formed through the main body (62) for allowing the fluid to flow into the cylinder (52) and the regenerator (58), and
- an outer surface of the main body (62) of the inner heat exchanger (60) contacts an inner surface of the case (50); and
- the main body (62) of the inner heat exchanger (60) having a ring shape is positioned between the cylinder (52) and the case (50).

2. The stirling cooler as set forth in claim 1, wherein an inner surface of the main body (62) of the inner heat exchanger (60) contacts an outer surface of the cylinder (52).

3. The stirling cooler as set forth in claim 1, wherein
- the cylinder (52) and the regenerator (58) are arranged in a line in an axial direction of the cylinder (52); and
- the through holes (64) of the inner heat exchanger (60) are formed in the axial direction of the cylinder (52).

4. The stirling cooler as set forth in claim 1, wherein the through holes (64) of the inner heat exchanger (60) are prepared in plural number along a circumferential direction of the main body (62) of the inner heat exchanger (60).

5. The stirling cooler as set forth in claim 1, wherein the through holes (64) of the inner heat exchanger (60) are prepared in plural number along a widthwise direction of the main body (62) of the inner heat exchanger (60).

## Patentansprüche

1. Stirling-Kühlvorrichtung, die umfasst:
- ein Gehäuse (50), das an einem Ende mit einer kalten Spitze (51) versehen ist;
- einen Zylinder (52), der an dem Gehäuse (50) befestigt ist und mit einem Fluid gefüllt ist;
- einen Kolben (55), der im Zylinder (52) installiert ist, derart, dass sich der Kolben hin und her bewegen kann;
- einen Verdränger (57), der im Kolben (55) installiert ist, derart, dass sich der Verdränger (57) hin und her bewegen kann;
- einen Regenerator (58), der zwischen dem Verdränger (57) und der kalten Spitze (51) angeordnet ist;
- einen inneren Wärmetauscher (60), der im Gehäuse (50) installiert ist, derart, dass der innere Wärmetauscher (60) mit dem Regenerator (58) und mit dem Zylinder (52) verbunden ist; und
- einen äußeren Wärmetauscher (70), der an einer äußeren Oberfläche des Gehäuses (50) gegenüber dem inneren Wärmetauscher (60) installiert ist,
- wobei der innere Wärmetauscher (60) einen Hauptkörper (62) enthält, um Wärme zu übertragen,
**dadurch gekennzeichnet, dass**
- durch den Hauptkörper (62) Durchgangslöcher (64) ausgebildet sind, um zu ermöglichen, dass Fluid in den Zylinder (52) und den Regenerator (58) strömt, und
- eine äußere Oberfläche des Hauptkörpers (62) des inneren Wärmetauschers (60) mit einer inneren Oberfläche des Gehäuses (50) in Kontakt ist; und
- der Hauptkörper (62) des inneren Wärmetauschers (60), der eine Ringform hat, zwischen dem Zylinder (52) und dem Gehäuse (50) angeordnet ist.

2. Stirling-Kühlvorrichtung nach Anspruch 1, wobei eine innere Oberfläche des Hauptkörpers (62) des inneren Wärmetauschers (60) mit einer äußeren Oberfläche des Zylinders (52) in Kontakt ist.

3. Stirling-Kühlvorrichtung nach Anspruch 1, wobei
- der Zylinder (52) und der Regenerator (58) in axialer Richtung des Zylinders (52) in einer Linie angeordnet sind; und
- die Durchgangslöcher (64) des inneren Wärmetauschers (60) in der axialen Richtung des Zylinders (52) ausgebildet sind.

4. Stirling-Kühlvorrichtung nach Anspruch 1, wobei die Durchgangslöcher (64) des inneren Wärmetauschers (60) in Umfangsrichtung des Hauptkörpers (62) des inneren Wärmetauschers (60) mehrfach vorgesehen sind.

5. Stirling-Kühlvorrichtung nach Anspruch 1, wobei die Durchgangslöcher (64) des inneren Wärmetauschers (60) in Breitenrichtung des Hauptkörpers (62) des inneren Wärmetauschers (60) mehrfach vorgesehen sind.

## Revendications

1. Refroidisseur à cycle de Stirling comprenant :
- un carter (50) pourvu d'un bout froid (51) à une extrémité de celui-ci ;
- un cylindre (52) fixé au carter (50) et rempli d'un fluide ;
- un piston (55) installé dans le cylindre (52) de manière telle que le piston peut aller et venir ;
- un piston auxiliaire (57) installé dans le piston (55) de manière telle que le piston auxiliaire (57) peut aller et venir ;
- un régénérateur (58) positionné entre le piston auxiliaire (57) et le bout froid (51) ;
- un échangeur de chaleur interne (60) installé dans le carter (50) de telle manière que l'échangeur de chaleur interne (60) est connecté au régénérateur (58) et au cylindre (52) ; et
- un échangeur de chaleur externe (70) installé sur la surface extérieure du carter (50) en face de l'échangeur de chaleur interne (60),
- dans lequel l'échangeur de chaleur interne (60) comprend un corps principal (62) pour transférer de la chaleur, **caractérisé en ce que** des trous traversants (64) sont formés dans le corps principal (62) pour permettre au fluide de circuler dans le cylindre (52) et dans le régénérateur (58), et
- une surface extérieure du corps principal (62) de l'échangeur de chaleur interne (60) est en contact avec une surface intérieure du carter (50) ; et
- le corps principal (62) de l'échangeur de chaleur interne (60) ayant une forme de bague est positionné entre le cylindre (52) et le carter (50).

2. Refroidisseur à cycle de Stirling selon la revendication 1, dans lequel une surface intérieure du corps principal (62) de l'échangeur de chaleur interne (60) est en contact avec une surface extérieure du cylindre (52).

3. Refroidisseur à cycle de Stirling selon la revendication 1, dans lequel :
- le cylindre (52) et le régénérateur (58) sont alignés dans une direction axiale du cylindre (52) ; et
- les trous traversants (64) de l'échangeur de chaleur interne (60) sont formés dans la direction axiale du cylindre (52).

4. Refroidisseur à cycle de Stirling selon la revendication 1, dans lequel les trous traversants (64) de l'échangeur de chaleur interne (60) sont préparés en une pluralité le long d'une direction circonférentielle du corps principal (62) de l'échangeur de chaleur interne (60).

5. Refroidisseur à cycle de Stirling selon la revendication 1, dans lequel les trous traversants (64) de l'échangeur de chaleur interne (60) sont préparés en une pluralité le long d'une direction de la largeur du corps principal (62) de l'échangeur de chaleur interne (60).
